(19) Europäisches Patentamt
European Patent Office
Office européen des brevets

(11) **EP 3 625 092 B1**

(12) **EUROPÄISCHE PATENTSCHRIFT**

(45) Veröffentlichungstag und Bekanntmachung des Hinweises auf die Patenterteilung:
**13.07.2022   Patentblatt 2022/28**

(21) Anmeldenummer: **18719490.7**

(22) Anmeldetag: **13.04.2018**

(51) Internationale Patentklassifikation (IPC):
**B60T 7/22** (2006.01)    **B60T 8/1755** (2006.01)
**B60W 30/16** (2020.01)

(52) Gemeinsame Patentklassifikation (CPC):
**B60T 7/22; B60T 8/1755; B60T 8/17558; B60W 30/16;** B60T 2201/022; G08G 1/166

(86) Internationale Anmeldenummer:
**PCT/EP2018/059524**

(87) Internationale Veröffentlichungsnummer:
**WO 2018/210500 (22.11.2018 Gazette 2018/47)**

(54) **VERFAHREN ZUM ERMITTELN EINER AUTONOMEN NOTBREMSUNG, VERFAHREN ZUR DURCHFÜHRUNG DER NOTBREMSUNG, UND STEUEREINRICHTUNG FÜR EIN FAHRDYNAMIKSYSTEM**

METHOD FOR DETERMINING AUTONOMOUS EMERGENCY BRAKING, METHOD FOR PERFORMING THE EMERGENCY BRAKING, AND CONTROL DEVICE FOR A DRIVING-DYNAMICS SYSTEM

PROCÉDÉ DE DÉTERMINATION D'UN FREINAGE D'URGENCE AUTONOME, PROCÉDÉ D'EXÉCUTION DU FREINAGE D'URGENCE, ET DISPOSITIF DE COMMANDE POUR UN SYSTÈME DE DYNAMIQUE DE TRANSLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2017   DE 102017111003**

(43) Veröffentlichungstag der Anmeldung:
**25.03.2020   Patentblatt 2020/13**

(73) Patentinhaber: **ZF CV Systems Europe BV
1170 Brussels (BE)**

(72) Erfinder: **MEYER, Rüdiger
30449 Hannover (DE)**

(74) Vertreter: **Rabe, Dirk-Heinrich
ZF CV Systems Hannover GmbH
Am Lindener Hafen 21
30453 Hannover (DE)**

(56) Entgegenhaltungen:
**EP-A1- 2 407 358        EP-A2- 2 287 059
WO-A1-2004/028847        DE-A1- 10 237 714
DE-A1-102005 054 754     DE-A1-102010 008 208
DE-A1-102013 008 073     DE-A1-102014 008 431**

**Beschreibung**

Die Erfindung betrifft ein Verfahren zum Ermitteln einer autonomen Notbremsung, ein Verfahren zur Durchführung der autonomen Notbremsung, sowie eine Steuereinrichtung für ein Fahrdynamiksystem eines Eigenfahrzeuges, zur Ermittlung und Ausführung einer derartigen autonomen Notbremsung. Ein derartiges Verfahren und eine derartige Steuereinrichtung sind z. B. aus der EP 2 814 704 B1 bekannt. Autonome Notbremsungen dienen insbesondere dazu, bei der Ermittlung von Fahrzustandsgrößen und weiteren Messgrößen, insbesondere einer Abstandsmessung zu einem vorderen Objekt, eine Notbremssituation zu erkennen und autonom, d. h. selbsttätig, einen Bremsvorgang einzuleiten. Hierzu kann z.B. eine Steuereinrichtung des Fahrdynamiksystems ein externes Bremssignal (XBR) an eine Bremseinrichtungs-Steuereinrichtung ausgeben, damit diese ein Bremssignal an Radbremsen ausgibt. Weiterhin kann ein derartiges Fahrdynamiksystem bereits in die Bremseinrichtung integriert sein. Mit einem derartigen Notbremssystem (autonomous emergency brake system, AEBS) kann somit eine Kollision bzw. ein Auffahrunfall mit einem erfassten vorderen Objekt ganz vermieden werden, oder aber eine Unfallschwere verringert werden.

Die DE102014008431 A1 offenbart ein Verfahren zur Kollisionsvermeidung oder Kollisionsfolgenminderung für Fahrzeuge, insbesondere für Busse im Linienbusverkehr, bei dem bei erkannter Kollisionsgefahr die Durchführung einer autonomen Teilbremsung mit begrenzter Bremsverzögerung durchgeführt, und wobei die Teilbremsung mit einer anfänglichen Bremsverzögerung eingeleitet wird, die in Abhängigkeit der Geschwindigkeit des Fahrzeugs vorgegeben wird.

Die DE102010008208 A1 offenbart ein Verfahren zur Verhinderung von Kollisionen oder Verminderung einer Kollsionsstärke eines Fahrzeugs mit den Schritten: Ermitteln einer einen Fahrzustand des Fahrzeugs kennzeichnenden Fahrzeugzustandsgröße, Ermitteln einer das Fahrzeug umgebende Objekte kennzeichnenden Objekte-Zustandsgröße, Ermitteln einer eine Kritikalität des Fahrzeugs kennzeichnenden Fahrzeugskritikalitätsgröße in Abhängigkeit von der Fahrzeugzustandsgröße und der Objekte-Zustandsgröße, Einleiten einer Notbremsung zur Verhinderung der Kollision oder Verminderung der Kollisionsstärke in Abhängigkeit von der Fahrzeugkritikalitätsgröße, wobei die Objekte-Zustandsgröße ein vor dem Fahrzeug befindliches Kollisionsobjekt und ein hinter dem Fahrzeug befindliches Kolonnenobjekt kennzeichnet.

Die DE102005054754 A1 offenbart ein Verfahren zum Ermitteln des Zeitpunktes für die Einleitung eines notwendigen Bremseingriffs für ein Kraftfahrzeug, um eine Kollision mit einem detektierten vorausfahrenden oder vorausstehenden Objekt zu vermeiden, und wobei der Zeitpunkt zum Einleiten des Bremseingriffes in Abhängigkeit von einer vorgegebenen, zu erwartenden Bremsverzögerung des Kraftfahrzeugs während des Bremseingriffs ermittelt wird, wobei die zu erwartende Bremsverzögerung derart ermittelt wird, dass bei Vorliegen eines aktuell ermittelten Reibwertes eine in Abhängigkeit von diesem Reibwert im Vergleich zu einer definierten Maximalverzögerung reduzierte Bremsverzögerung vorgegeben wird und dass bei Nichtvorliegen eines aktuell ermittelten Reibwertes eine erhöhte Bremsverzögerung vorgegeben wird.

Die DE10237714 A1 offenbart ein Verfahren zur automatischen Einleitung eines Notbremsvorgangs mit vorausgehender Warnbremsung bei Kraftfahrzeugen, wobei bei der Warnbremsung die erreichbare Fahrzeug Verzögerung ermittelt wird und dass der Zeitpunkt der Einleitung der Notbremsung in Abhängigkeit von der ermittelten Fahrzeugverzögerung variiert wird.

Bei derartigen Notbremssystemen bzw. Notbrems-Verfahren kann somit das dynamische Verhalten des Eigenfahrzeugs z. B. als Bewegungsgleichung in zweiter Ordnung der Zeit (Ortsfunktion in zweiter Ordnung der Zeit) mit der aktuellen Position, der Eigengeschwindigkeit und der Eigenbeschleunigung herangezogen werden, und weiterhin können entsprechende Werte für das erfasste Objekt gebildet werden, so dass Bewegungsgleichungen des Eigenfahrzeugs und des Objektes, oder auch Differenzwerte, d.h. ein Differenzabstand und Differenzgeschwindigkeiten, gebildet werden. Hierdurch kann ein dynamisches Kriterium in Längsrichtung (Längsdynamik-Kriterium) gebildet werden. Weiterhin kann auch ein querdynamisches Verhalten berücksichtigt werden, das z.B. als Ausweich-Kriterium ermittelt werden kann und einen möglichen Ausweichvorgang des Fahrers zur Seite berücksichtigt.

Bei derartigen Bremssystemen kann weiterhin eine Warnphase vor Einleitung der autonomen Notbremsung vorgesehen sein, bei der dem Fahrer ein Warnsignal angezeigt wird, dass eine Notbremsung bevorsteht. Somit kann der Fahrer jetzt z. B. selbsttätig eine Fahrer-Bremsung oder auch einen Ausweichvorgang einleiten. Weiter kann auch vorgesehen sein, dass der Fahrer die erkannte Notbremssituation unterdrückt, da er erkennt, dass eine falsche Detektion vorliegt, und das vermeintliche Objekt nicht als reales Objekt zu bewerten ist, sondern der Abstandssensor z. B. eine Brücke oder andere Verengung als kollisionsgefährdendes Objekt erkannt hat.

Weiterhin sind haptische Warnphasen bekannt, bei denen dem Fahrer durch eine leichte Bremsung haptisch, d. h. als Brems-Ruck, die bevorstehende Einleitung einer Notbrems-Phase angekündigt wird.

Nach den Warnphasen wird dann im Allgemeinen die Notbrems-Phase, vorzugsweise mit einem maximalen Bremsdruck, eingeleitet.

Hierbei können Mindest-Zeitdauern für die Warnphase oder die addierte Warnphase vorgesehen sein, um dem Fahrer hinreichende Zeit zu vermitteln.

Bei derartigen Ermittlungen der Notbremsung als Bewegungsgleichung der Zeit und Heranziehung von Zeitdauern für die Warnphasen vor der Einleitung des Brems-Vorgangs kann jedoch ein recht früher Zeitpunkt ermittelt werden, zu dem die Warnphase eingeleitet wird. Sehr frühe erste Zeitpunkte zur Einleitung der Warnphase können jedoch gegebenenfalls unberechtigt sein, und den Fahrer zu riskantem Verhalten veranlassen, obwohl dies noch nicht zwingend geboten ist.

Der Erfindung liegt daher die Aufgabe zugrunde, ein Verfahren zum Ermitteln einer Notbremsung, ein entsprechendes Verfahren zum Durchführen einer Notbremsung, sowie eine Steuereinrichtung für derartige Verfahren zu schaffen, die sichere Notbremsungen ermöglichen und unnötige frühere Initiierungen verringern. Weiterhin soll ein Fahrzeug mit einer derartigen Steuereinrichtung vorgesehen sein.

Diese Aufgabe wird durch die Verfahren nach den unabhängigen Ansprüchen, die Steuereinrichtung nach dem unabhängigen Anspruch und ein Kraftfahrzeug mit einer derartigen Steuereinrichtung gelöst. Die Unteransprüche beschreiben bevorzugte Weiterbildungen.

Somit wird bei der Bewertung des dynamischen Kriteriums zumindest in einigen Situationen bzw. Verkehrssituationen eine Teilbrems-Wirkung während der haptischen Warnphase berücksichtigt. Hierbei wird erkannt, dass in der haptischen Warnphase die leichte Bremswirkung zwar zunächst nur als haptische Rückmeldung an den Fahrer dient; hierdurch wird jedoch bereits eine gewisse Bremswirkung erreicht, die durchaus zur Ermittlung der Zeitpunkte zur Einleitung der Phasen berücksichtigt werden kann. Somit kann eine höhere Bremswirkung und somit eine gesamte Verkürzung des aus den mehreren Phasen bestehenden Notbrems-Vorgangs ermittelt werden. Somit kann insbesondere bereits der erste Zeitpunkt zur Einleitung der Warnphase nach hinten gestellt werden, d. h. später eingeleitet werden.

Hierdurch kann mit bereits zur Verfügung stehenden Messgrößen ein genaueres, einen späteren ersten Zeitpunkt zur Einleitung der Warnphase lieferndes Verfahren bereitgestellt werden.

Die Berücksichtigung der Teilbremswirkung kann immer oder nur in einigen Verkehrssituationen erfolgen. Gemäß der Erfindung kann erkannt werden, dass eine derartige Berücksichtigung auch der Teilbrems-Wirkung während der haptischen Warnphase gefährlich oder problematisch sein kann, wenn die Konfidenz bzw. Zuverlässigkeit einer derartigen Teilbremsung nicht sichergestellt ist. So sehen einige Systeme vor, dass durch den Fahrer die Teilbremsphase und ggf. auch die Notbrems-Phase ausgeschaltet werden können und lediglich die Warnung während der Warnphase ausgegeben wird. Auch kann die Zuverlässigkeit der Messung durch das Abstandmesssystem verringert sein. Eventuell kann aus den bisherigen Abstands-Messsignalen erkannt werden, dass Ungenauigkeiten vorliegen, z. B. durch nicht eindeutige Werte. Falls somit eine geringe Zuverlässigkeit oder geringe Konfidenz erkannt wird, die z. B. unter einem Schwellwert liegt, kann entschieden werden, die Teilbremswirkung während der haptischen Warnphase nicht zu berücksichtigen. Falls hingegen eine hinreichende Zuverlässigkeit oder Konfidenz vorliegt, kann diese Teilbremswirkung während der Teilbremsphase berücksichtigt werden. Somit ist erfindungsgemäß vorgesehen, die Teilbremswirkung in Abhängigkeit der Zuverlässigkeit (Konfidenz) der Situation zu berücksichtigen.

Es zeigt sich bereits hierdurch, dass durch diese zeitweise bzw. situationsabhängige mögliche Berücksichtigung der Teilbremswirkung während der haptischen Kollisionsphase zum einen eine hohe Sicherheit gewährleistet wird, da in kritischen Situationen bzw. eine hohe Verlässlichkeit nicht garantierenden Situationen die Teilbremsphase nicht berücksichtigt wird. Dennoch kann in vielen Fällen ein späterer Zeitpunkt zur Einleitung der Warnphase gewählt werden, ohne dass kritische Situationen auftreten. Erfindungsgemäß sind weitere Weiterbildungen vorgesehen. Indem bereits während der Warnphase ein Bremslicht-Signal an ein Bremslicht ausgegeben wird, kann der nachfolgende Verkehr bereits vor der Notbrems-Phase informiert werden, dass bald eine Notbremsung erfolgt. Somit können kritische Situationen durch von hinten herankommende Fahrzeuge bereits frühzeitig vermindert werden.

Weiterhin kann zusätzlich zu der reinen Berücksichtigung der Längsbeschleunigung in dem dynamischen Kriterium (zweiten Kriterium) auch ein Ausweichkriterium als Querverhalten berücksichtigt werden.

Die Erfindung wird im Folgenden anhand der beiliegenden Zeichnung an einigen Ausführungsformen erläutert. Es zeigen:

Fig. 1      eine Darstellung einer Straßenszene eines Eigenfahrzeugs gemäß einer Ausführungsform der Erfindung;

Fig. 2      den zeitlichen Ablauf verschiedener Phasen des Verfahrens gemäß einer Ausführungsform der Erfindung;

Fig. 3      ein der Fig. 2 entsprechendes zeitliches Diagramm zur Ermittlung eines dynamischen Längsverhaltens, gemäß einer weiteren Ausführungsform der Erfindung,

Fig. 4      Flussdiagramme von Verfahren gemäß zweier Ausführungsformen der Erfindung.

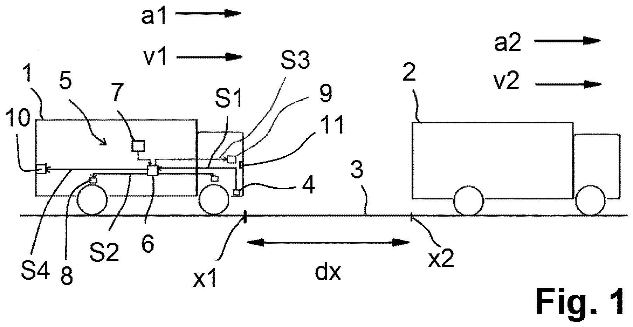

Ein Eigenfahrzeug (Ego-Fahrzeug) 1 fährt auf einer Fahrbahn 3; es befindet sich auf einer ersten Position bzw. aktuellen Eigen-Position x1, die hier durch das vordere Ende des Eigenfahrzeugs 1 bestimmt ist, und fährt mit einer Eigen-Fahrgeschwindigkeit v1 (ersten Fahrgeschwindigkeit) und einer Eigen- Längsbeschleunigung a1 (ersten Längs-Beschleunigung). Hierbei werden gemäß Figur 1 zunächst nur Bewegungen in der Längsrichtung bzw. x-Richtung betrachtet. Vor dem Eigenfahrzeug 1 befindet sich ein Objekt 2, das z. B. wiederum ein Fahrzeug sein kann. Das Objekt 2 befindet sich auf einer zweiten Position x2 (Objektposition), die hier durch seine dem Eigenfahrzeug 1 nächste Position, d.h. das hintere Ende des Objektes 2, bestimmt ist, und fährt mit einer zweiten Geschwindigkeit v2 und einer zweiten Längs-Beschleunigung a2. Zwischen der Eigen-Position x1 (ersten Position) x1 und der zweiten Position x2 wird somit ein Längsabstand dx gebildet.

Das Eigenfahrzeug 1 weist einen Abstandsensor 4, z. B. auf Radar-Basis, Ultraschall-Basis oder als Kamerasystem zur Erfassung des Längsabstandes dx auf, der ein Relativabstands-Messsignal S1 an eine Steuereinrichtung 6 eines Fahrdynamiksystems 5 ausgibt. Das Relativabstands-Messsignal S1 kann zusätzlich zu dem Längsabstand dx auch eine Längsgeschwindigkeitsdifferenz Dvx direkt gemessen werden, und dann insbesondere eine Längsbeschleunigungsdifferenz Dax berechnet werden. Das Eigenfahrzeug 1 bzw. dessen Fahrdynamik-System 5 weist weiterhin einen Geschwindigkeitssensor 7 zur Erfassung der ersten Fahrgeschwindigkeit v1 auf, z.B. aus den ABS-Raddrehzahlsensoren oder auch der Drehzahl einer Abtriebswelle. Die Steuereinrichtung 6 gibt Bremssignale S2 an Radbremsen 8 zur Durchführung einer Bremsung aus, die somit eine negative Beschleunigung, d. h. eine erste Längsbeschleunigung a1 mit negativen Wert erzeugt. Weiterhin gibt die Steuereinrichtung 6 Warnsignale S3 an eine Warnanzeige 9 für den Fahrer, z. B. im Cockpitbereich des Eigenfahrzeugs 1 aus. Die Warnanzeige 9 kann akustisch und/oder optisch ausgebildet sein.

Die Steuereinrichtung 6 kann somit für das Eigenfahrzeug 1 und entsprechend durch Ermittlung des zeitlichen Verhalten des Längsabstandes dx und gegebenenfalls der Längsgeschwindigkeitsdifferenz Dvx auch für das Objekt 2 jeweils Orts-Funktionen x(1) und x(2) in Abhängigkeit der Zeit, z. B. in zweiter Ordnung der Zeit erstellen, insbesondere mit längsdynamischen Bewegungsgleichungen GL1, GL2, z.B. für das Eigenfahrzeug 1

$$x\,(1) = x1 + v1\cdot t + a1\cdot 1/2\cdot t^2 \quad (GL1)$$

und für das Objekt 2

$$x\,(2) = x2 + v2\cdot t + a2\cdot 1/2\cdot t^2 \quad (GL2)$$

,die entsprehchend auch als Differenzgleichung aufgestellt werden kann.

Bei einer komplexeren Betrachtung kann auch das querdynamische Verhalten mit berücksichtigt werden.

Somit kann das Eigenfahrzeug 1 zum einen vom Fahrer durch Fahrer-Bremsungen abgebremst werden, und weiterhin durch autonome Bremsungen. Hierzu ist in der Steuereinrichtung 6 ein autonomes Notbremssystem (AEBS, autonomous emergency braking system) ausgebildet bzw. integriert, das zur Einleitung autonomer Notbremsungen geeignet ist. Die autonomen Notbremsungen können insbesondere zur Vermeidung einer Kollision mit dem vorderen Objekt 2, und/oder auch zur Verringerung der Unfallschwere eines Unfalls mit dem vorderen Objekt 2 ausgebildet sein.

Bei Ausbildung eines externen Fahrdynamiksystems 5 werden zur Einleitung einer autonomen Bremsung XBR -Befehle (external brake requests) ausgebildet und verarbeitet, was insbesondere durch eine erste Steuereinrichtung für das Fahrdynamiksystem 5 und eine weitere Steuereinrichtung für das Bremssystem des Eigenfahrzeugs 1 vorgesehen sein kann; zur vereinfachten Darstellung ist in Figur 1 eine gemeinsame Steuereinrichtung 6 des Fahrdynamik-Systems 5 vorgesehen; es können jedoch auch getrennte Steuereinrichtungen ausgebildet sein und miteinander kommunizieren.

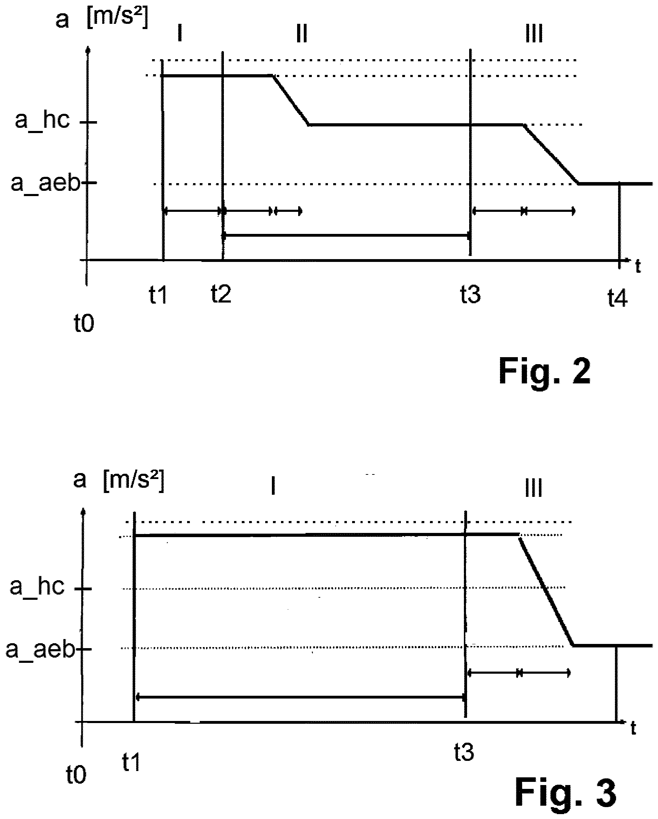

Zur Einleitung einer Notbremsung sind folgende Phasen vorgesehen, die in Fig. 2 dargestellt sind, wobei in Fig. 2 als Abszisse die Zeit und als Ordinate eine Längsbeschleunigung, d.h. nach unten hin zunehmende Bremswirkung, aufgetragen ist:

- In einer ersten Warnphase I (FCW, forward collision warning) wird dem Fahrer mittels der Warnanzeige 9 eine Warnung angezeigt, z. B. als akustischer Ton oder optisches Signal, ohne autonomen Bremseingriff,

- in einer nachfolgenden haptischen Warnphase oder Teilbrems-Warnphase II (HCW, haptic collision warning) erfolgt eine autonome Teil-Bremsung, d. h. mit einem Bremsdruck-Wert p_hc der zu einer Teilbeschleunigung a_hc führt, z. B. mit dem Beschleunigungswert a_hc =-3,5 m/s$^2$. Hierdurch wird eine haptische Kollisionswarnung an den Fahrer ausgegeben, der den Bremsruck merkt und hierdurch auf die bevorstehende volle Bremsung bzw. Notbremsung hingewiesen wird.

- In der nachfolgenden Notbrems-Phase III (AEB, autonomous emergency braking) erfolgt dann eine Not-Bremsung, insbesondere mit dem Bremsdruck p_aeb, der insbesondere ein maximaler Bremsdruck sein kann. Die erreichte Notbrems-Beschleunigung a_aeb ist somit vorzugsweise eine Beschleunigung der maximalen Bremsung, z. B. mit

$a\_aeb = -6 \text{ m/s}^2$.

Vorteilhafterweise wird bereits während der ersten Warnphase I ein Bremslicht-Signal S4 an Bremslichter 10 des Eigenfahrzeugs 1 ausgegeben, so dass der hintere Verkehr auf die vorstehende Bremsung hingewiesen wird. Bei der Berechnung der Phasen I, II, III wird in der Steuereinrichtung 6 berücksichtigt:
Für die Warnphase I und/oder Teilbrems-Phase II sind vorzugsweise Mindestzeiten festgelegt. So kann für die Warnphase I eine erste Mindest-Zeitdauer $\Delta t0\_I$ (Warnphasen-Mindestzeitdauer) festgelegt sein, z. B. 0,6 Sekunden und für die Teilbrems-Phase II eine zweite Mindest-Zeitdauer $\Delta t0\_II$ (Teilbremsphasen-Mindestzeitdauer) von z.B. 1 Sekunde, und/oder eine Mindest-Warnzeit $\Delta t0\_w$ als Summe dieser Mindest-Zeitdauern, z. B. 1,6 Sekunden. Wenn der Fahrer während der Warnphase I und/oder der Teilbrems-Warnphase II selber aktiv die Bremse betätigt bzw. einen Fahrer-Bremsvorgang einleitet, kann diese Fahrer-Bremsung Vorrang haben, oder es können die Teilbremsung und die Fahrerbremsung nach dem Maximalwert-Prinzip berücksichtigt werden, d. h. der höhere Bremsdruck von beiden wird durchgesteuert. Weiterhin kann dem Fahrer während der beiden Warnphasen I, II insbesondere auch ein Ausweichvorgang als querdynamischer Vorgang ermöglicht sein, d.h. ein Steuervorgang, durch den er eventuell eine Kollision verhindern oder die Kollisionsschwere verringern kann.

Die Steuereinrichtung 6 berechnet hierbei insbesondere unter Verwendung der dynamischen Bewegungsgleichungen, unter anderem der Gleichungen GL1, GL2, den ersten Anfangs-Zeitpunkt t1 zur Einleitung der Warphase I, den zweiten Anfangs-Zeitpunkt t2 zur Einleitung der Teilbrems-phase II und den dritten Anfangs-Zeitpunkt t3 zur Einleitung der Notbrems-Phase III, und die Zeitdauern $\Delta t\_I$, $\Delta t\_II$ und $\Delta t\_III$ der drei Phasen I II, III, wobei z.B. die Notbremsung zum Zeitpunkt t4 abgeschlossen ist, wobei in t4 z.B. ein Stillstand (v1=0) oder auch eine Kollision auftreten kann.

Fig. 2 beschreibt somit einen projizierten idealen Verlauf gemäß einer Ausführungsform eines erfindungsgemäßen Verfahrens zur Ermittlung eines Notbremsvorganges, der nachfolgend bei der Durchführung des Verfahrens zur Notbremsung gegebenenfalls geändert wird, insbesondere aufgrund aktueller Messdaten, die geänderte Eigendynamik-Größen und/oder einen geänderten Längsabstand dx anzeigen.

Bei der Berechnung werden folgende Kriterien herangezogen:

- ein Zeitdauer-Kriterium K1,
  wonach die Warnphase I und die Teilbrems-Phase II die oben genannten zeitlichen Mindestdauern erfüllen müssen, d. h. ihre Zeitdauern erfüllen z. B. die Bedingungen:

$$\Delta t\_I \geq \Delta t0\_I \, , \quad \text{(Bedingung K1-I)}$$

$$\Delta t\_II \geq \Delta t0\_II \, , \quad \text{(Bedingung K1-II)}$$

- ein dynamisches Kriterium K2
  das insbesondere ein Längsdynamik-Kriterium K2-L umfassen kann, bei dem die bisherige Längsdynamik und die durch die autonomen Eingriffe erzielten Beschleunigungen berücksichtigt und Ortsfunktionen zweiten Grades der Zeit erstellt werden, d.h. insbesondere die oben genannten Gleichungen GL1, GL2. Hierbei kann z. B. auch die Bedingung angesetzt werden, dass dx(t4)>0 ist, d. h. der Längsabstand dx zum Endzeitpunkt t4>0 ist und somit keine Kollision stattgefunden hat.

In dem dynamischen Kriterium K2 wird die Notbrems- Längsbeschleunigung a_aeb in der Notbrems-Phase III berücksichtigt.

Weiterhin wird gemäß einer ersten Ausführungsform auch die in der Teilbrems-Phase III als haptisches Signal vorgesehene HCW- Längsbeschleunigung a_hc berücksichtigt. Somit wird ein Gleichungssystem erstellt, bei dem die unterschiedlichen Längsbeschleunigungen, insbesondere a_hc und a_aeb in den jeweiligen Phasen berücksichtigt werden.

Hierbei wird insbesondere - wie in Figur 2 durch den schrägen Verlauf angedeutet - jeweils in den Phasen II, III der zeitliche Aufbau des Bremsdrucks bis zum Erreichen des vollen Druckwerts berücksichtigt.

Somit wird auch die Bremswirkung a_hc der Teilbrems-Phase II bereits berücksichtigt, wobei hier erkannt wird, dass die zunächst der haptischen Rückmeldung dienende Teilbremsung auch eine erhebliche Auswirkung, nämlich eine Verkürzung der Gesamtzeitdauer t4-t1, zur Folge hat. Somit kann insbesondere ein späterer Zeitpunkt t1 festgelegt werden als ohne eine Berücksichtigung der Teil-Beschleunigung a_hc.

Ergänzend kann in dem dynamischen Kriterium K2 auch das querdynamische Verhalten als Teil-Kriterium K2-q, insbesondere als ein Ausweichmanöver, berücksichtigt werden; somit können z.B. eine aktuelle Querbeschleunigung aq und/oder Gierrate $\omega$ berücksichtigt werden.

Gemäß dieser ersten Ausführungsform erfolgt somit eine Voraus-Berechnung, die die Steuereinrichtung 6 zum aktuellen Zeitpunkt t0 durchführt, um die Anfangs-Zeitpunkte t1, t2, t3 zu ermitteln, bei denen die Steuereinrichtung die nächste Phase einleiten wird, unter Berücksichtigung der Teilbrems-Längsbeschleunigung a_hc in der Teilbrems-Warnphase II.

Gemäß einer hierzu abgewandelten zweiten Ausführungsform werden ebenfalls die Phasen I, II, III nacheinander durchgeführt; bei der Ermittlung der Zeitpunkte t1, t2 und t3 wird auch das Zeitdauer-Kriterium K1 unverändert herangezogen. Allerdings wird bei der Ermittlung des längsdynamischen Verhaltens zunächst entschieden, ob die Bremswirkung der Teilbrems-Längsbeschleunigung a_hc in der Teilbrems-Phase I berücksichtigt werden soll oder nicht.

Hierfür wird z.B. eine Zuverlässigkeit (Konfidenz) Z ermittelt, z.B. als skalarer Wert zwischen Z=0, d.h. ganz unwahrscheinlich, und Z=1 als maximale Wahrscheinlichkeit. Hierbei kann dann Z mit einem Kritikalitäts-Schwellwert Z_tres verglichen werden, d.h. als Abfrage Z< Z_tres ?

Falls entschieden wird, dass keine hinreichende Zuverlässiskeit Z vorliegt, erfolgt gemäß dem Diagramm der Figur 3 die Aufstellung einer Ortsfunktion zweiten Grades der Zeit unter Ansatz einer Beschleunigung lediglich in der Notbrems-Phase III. Somit wird hier angesetzt, dass die Zeitdauern $\Delta t\_I$ und $\Delta t\_II$ keine relevante Bremswirkung durch das Notbremssystem bzw. durch das XBR-Signal aufweisen, und erst in der Notbrems-Phase III eine relevante autonome Bremsung, d. h. Beschleunigung, auftritt. Grundsätzlich kann allerdings weiterhin eine bereits vorliegende Fahrer-Bremsung in den Phasen I und II berücksichtigt werden.

Gemäß der zweiten Ausführungsform erfolgt somit bei zu geringer Zuverlässigkeit Z < Z_tres eine Nicht-Berücksichtigung der autonomen Teilbrems-Längsbeschleunigung a_hc der Teilbrems-Warnphase II. Dem liegt die Überlegung zugrunde, dass zum aktuellen Zeitpunkt t0, bei dem die Zeitpunkte t1, t2, t3 angesetzt werden, noch nicht sicher angenommen werden kann, dass eine hinreichende Sicherheit der Verfügbarkeit bzw. Konfidenz der Funktionsfähigkeit vorliegt. Somit ist zu dem Zeitpunkt t0 zum einen nicht klar, ob wirksam ein XBR für die haptische Teilbrems-Warnphase II ausgegeben werden kann. So ermöglichen es z. B. einige Fahrzeuge, auf Fahrerwunsch hin, z. B. durch eine Bedieneinrichtung 11, die gesamte Notbrems-Funktion oder Teile von dieser abzuschalten. So kann insbesondere vorgesehen sein, dass nur die Warnphase I als akustische Warnung ausgegeben wird, aber keine haptische Teilbremsung bzw. Teilbrems-Phase II und keine Notbrems-Phase III erfolgt.

Somit wird gemäß der zweiten Ausführungsform in dem längsdynamischen Kriterium zur Ermittlung der Zeitpunkte t1, t2, t3 eine Notbremsung gemäß Figur 3 ermittelt, die keine haptische Teilbrems-Warnphase II und somit keine autonome Teil-Bremsung aufweist, wobei gegebenenfalls die Notbremsung in der Notbrems-Phase III vom Fahrer selbst durchzuführen ist. Bei einer derartigen vom Fahrer eingeleiteten selbsttätigen Bremsung zur Vermeidung der Kollision erfolgt zuvor jedoch keine Teilbremsung.

Diese Berechnung auf Grundlage der Fig 3 erfolgt, obwohl nachfolgend vorzugsweise eine derartige haptische Teilbrems-Warnphase II zum Zeitpunkt t2 dennoch eingeleitet werden soll. Gemäß dem Diagramm der Figur 3 wird somit z.B. ein früherer Zeitpunkt t1 ermittelt, da die Teil-Bremsbeschleunigung a_hc bei der Berechnung nicht berücksichtigt wird.

Hierbei kann in der zweiten Ausführungsform bei zu geringer Zuverlässigkeit Z bei der Notbremsung eine Beschleunigung a_aeb vom gleichen Wert wie in der ersten Ausführungsform, d. h. zum Beispiel a_aeb = -6 m/s$^2$ angesetzt werden.

Die Figuren 2 und 3 stellen somit den idealen Verlauf gemäß der Projizierung dar, d.h. gemäß dem Verfahren zur Ermittlung einer Notbremsung. Bei dem Verfahren zur Durchführung der autonomen Notbremsung wird anschließend vorzugsweise die Einleitung der jeweils nächsten Phase von einer aktuellen Bewertung der Situation abhängig gemacht, wobei insbesondere eine Kritikalität K der aktuellen Verkehrssituation, z.B. als Wahrscheinlichkeit einer Kollision, bewertet wird. In diese Bewertung einer Kritikalität K kann insbesondere wiederum eine Bewertung eines aktuellen längsdynamischen Kriteriums K2-I, vorzugsweise auch eines querdynamischen Kriteriums K2-q, eingehen. Hierbei sind insbesondere auch der aktuell ermittelte Längsabstand dx und die aktuell ermittelten Fahrdynamik-Größen v1, a1, v2, a2 relevant. So kann dann z.B. die Kritikalität K mit jeweils K-Schwellwerten K_tres_I, K_tres_II und K_tres_III verglichen werden, um zu entscheiden, ob die nächste Phase I, II, III eingeleitet wird.

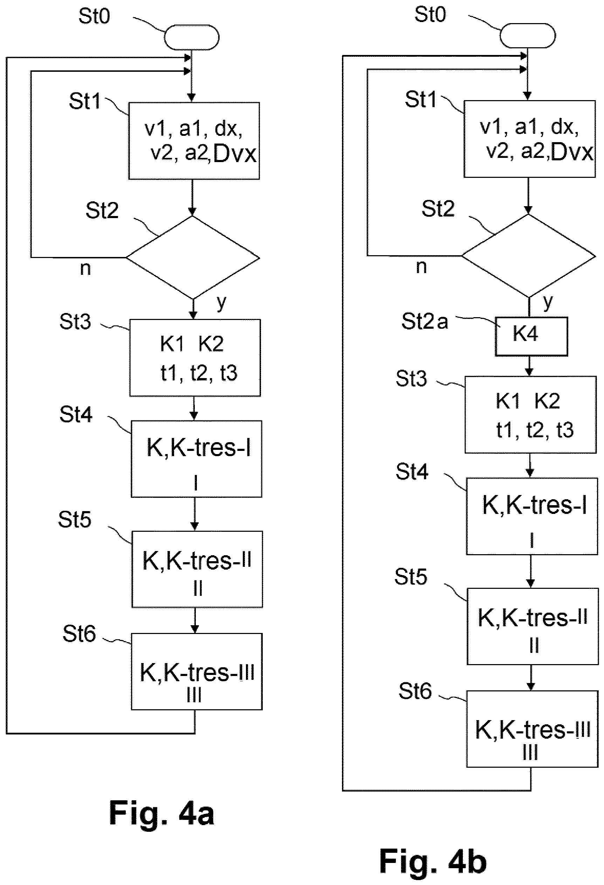

Die Verfahren gemäß der ersten und zweiten Ausführungsform sind in den Flussdiagrammen der Fig. 4a, b gezeigt:

Ein Start des Verfahrens der ersten Ausführungsform der Fig. 2 erfolgt nach Fig. 4a in Schritt St0, bereits bei Start des Motors oder Beginn der Fahrt mit v1>0. Nachfolgend werden gemäß Schritt St1 fortlaufend Daten aufgenommen, und zwar insbesondere Fahrdynamik-Signale des Eigenfahrzeugs 1, insbesondere wird die Eigengeschwindigkeit v1 als Geschwindigkeits-Messsignal S4 aufgenommen, weiterhin werden Abstand-Messsignale S1 des Abstandsensors 4 aufgenommen. Auch können weitere Fahrdynamik-Signale, z. B. eine Längsbeschleunigung aufgenommen werden; auch können - in Figur 1 nicht gezeigter Weise - entsprechend Querdynamik-Signale, z. B. eine Querbeschleunigung und/oder eine Gierrate des Eigenfahrzeugs 1 aufgenommen werden. Aus dem Abstands-Messsignal S1 wird in der Steuereinrichtung 6 weiterhin gemäß Schritt St1 eine Objekt-Erkennung und Objekt-Klassifizierung durchgeführt, bei der somit ein Objekt 2, z. B. ein vorausfahrendes Fahrzeug, als solches erkannt wird. Hierbei können aus dem zeitlichen Verhalten der Abstands-Messsignale S1 entsprechend auch das Fahrverhalten des Objektes 2, d. h. insbesondere v2 und a2, ermittelt werden.

In Schritt St2 wird auf Grundlage der in Schritt St1 ermitteln Fahrdynamik-Signale dann ermittelt, ob ein Notbrems-Verfahren einzuleiten ist. Falls dies der Fall ist, wird gemäß Verzweigung y nachfolgend in Schritt St3 auf Grundlage der Kriterien K1 und K2 und ggf. weitere Kriterien der gesamte Notbremsvorgang mit den drei Phasen I, II, III ermittelt, insbesondere mit festen Anfangs-Zeitpunkten t1, t2, t3 zur Einleitung der jeweils nächsten Phase. Somit werden die Phasen und die Anfangs-Zeitpunkte t1, t2, t3 derartig ermittelt, dass z. B. eine Kollision vermieden wird und weiterhin die gesetzlich geforderten Mindest-Zeitdauern, insbesondere Δt0_I und Δt_II, eingehalten bzw. nicht überschritten werden.

Die Schritte St0 bis St3 beschreiben somit das Verfahren zur Ermittlung des Notbremsvorgangs; nachfolgend werden dann gemäß Schritt St4, St5 und St6 die Phasen I, II, III eingeleitet, so dass die Schritte St0 bis St6 das Verfahren zur Durchführung des Notbremsvorgangs beschreiben. Wie bereits oben ausgeführt erfolgt die reale Einleitung der nächsten Phasen I, II, III vorzugsweise nicht zwingend zu den ermittelten Zeitpunkten t1, t2, t3, sondern jeweils in Abhängigkeit aktueller Kritikalitäten K und eines Vergleichs der ermittelten Kritikalitäten K mit K-Schwellwerten.

Das Verfahren der zweiten Ausführungsform der Fig. 3 ist in Fig. 4b gezeigt und weist zunächst die Schritte St0 bis St2 entsprechend Fig. 4a auf. Dann erfolgt ein Zwischenschritt St2a zwischen Schritt St2 und Schritt St3. In dem Zwischenschritt St2a wird entschieden, ob eine Ermittlung des längsdynamischen Verhaltens des zweiten Kriteriums K2 der Anfangs-Zeitpunkte t1, t2 t3 nach Fig. 2 oder 3 erfolgen soll, d. h. unter Berücksichtigung einer Teilbrems-Warnphase II mit der Teil-Bremsbeschleunigung a_bc oder ohne diese. Hierzu kann z.B. ein Verfügbarkeits-Kriterium K4 angesetzt werden, bei dem zwischen diesen beiden Alternativen der Berechnung entschieden wird. Nachfolgend wird dann in Schritt St3 wiederum die die Berechnung und Einleitung der Phasen I, II, III nach dem zuvor gewählten BerechnungsVerfahren durchgeführt, d.h. eine Berechnung der Zeitpunkte t1, t2, t3.

Dann erfolgt wiederum nachfolgend in Schritt St4, St5, St6 die Durchführung der Notbremsung. Auch bei dieser Ausführungsform erfolgt die Einleitung der Phasen I, 11, III nicht zwingend zu den Anfangs-Zeitpunkten t1, t2, t3, sondern - wie bereits oben ausgeführt - es erfolgt eine reale Einleitung der nächsten Phasen I, II, III vorzugsweise jeweils in Abhängigkeit aktueller Kritikalitäten K und eines Vergleichs der ermittelten Kritikalitäten K mit K-Schwellwerten K-tres-I, K-tres-I, K-tres-III.

Bezugszeichenliste (Bestandteil der Beschreibung)

1 Eigenfahrzeug
2 Objekt
3 Fahrbahn
4 Abstandsensor
5 Fahrdynamiksystem
6 Steuereinrichtung
7 Geschwindigkeitssensor
8 Radbremsen
9 Warnanzeige, Anzeigeeinrichtung, akustisch und/oder optisch
10 Bremslichter
11 Bedieneinrichtung zur Deaktivierung der autonomen Bremsfunktion

a1 Eigenbeschleunigung, erste Längsbeschleunigung
v1 Eigengeschwindigkeit, erste Fahrgeschwindigkeit
x1 Eigen-Position
x2 zweite Position (Objektposition
v2 zweite Geschwindigkeit
a2 zweite Längs-Beschleunigung

aq Querbeschleunigung des Eigenfahrzeugs 1
ω Gierrate des Eigenfahrzeugs 1
dx Längsabstand
Dvx Längsgeschwindigkeitsdifferenz
Dax Längsrelativbeschleunigungsdifferenz

GL1, GL2 dynamische Bewegungsgleichungen

I   ersten Warnphase, FCW-Phase
II   haptische Warnphase, Teilbrems-Warnphase, HCW-Phase
III   Notbrems-Phase, AEB-Phase

$a\_hc$   Teilbrems-Längsbeschleunigung in der Teilbrems-Warnphase II
$p\_hc$   Teilbrems-Bremsdruck in der Teilbrems-Warnphase II

$a\_aeb$   Notbrems-Beschleunigung in der Notbrems-Phase III
$p\_aeb$   Notbrems-Bremsdruck in der Notbrems-Phase III
S1      Abstands-Messsignale
S2      Bremssignal
S3      Warnsignal
S4      Bremslicht-Signal

t1, t2, t3   Anfangs-Zeitpunkte der Phasen I, II, III

K1                  Zeitdauer-Kriterium,
K2                  dynamisches Kriterium
K2-L                längs dynamisches Teilkriterium
K2-q                querdynamisches Teilkriterium
K4                  Entscheidungs-Kriterium zur Wahl der Berechnung
K                   Kritikalität
K-tres-I, K-tres-I, K-tres-III   Kritikalitäts-Schwellwerte

**Patentansprüche**

1.  Verfahren zur Ermittlung einer autonomen Notbremsung eines Eigenfahrzeugs (1), mit mindestens folgenden Schritten:

    Aufnehmen von Fahrdynamik-Größen (v1, a1) des Eigenfahrzeugs (1), Aufnehmen von Abstands-Messsignalen (S1) und Ermitteln zumindest eines Längsabstandes (dx) des eigenen Fahrzeugs (1) von einem vorderen Objekt (2) (St1),
    Bewerten, ob auf Grundlage der Fahrdynamik-Größen (v1, a1) und der Abstands-Messsignale (S1) eine Notbremsung einzuleiten ist (St2), falls auf eine Einleitung einer Notbremsung entschieden wird (y), Ermitteln

    - eines ersten Anfangspunktes (t1) zur Einleitung einer Warnphase (I) unter Ausgabe eines Warnsignals (S3) ohne Einleitung einer Bremsung,
    - eines zweiten Anfangspunktes (t2) zur Einleitung einer nachfolgenden Teilbrems-Phase (II.) mit einem niedrigeren Teilbrems-Bremsdruck ($p\_hc$) und
    - eines dritten Anfangspunktes (t3) zur Einleitung einer nachfolgenden Notbrems-Phase (III.) zur Einleitung einer Notbrems-Phase (III.) mit einem höheren Notbrems-Bremsdruck ($p\_aeb$), (St3) wobei bei der Ermittlung der Anfangspunkte (t1, t2, t3) herangezogen werden
    - ein Zeitdauer-Kriterium (K1) mit Mindestdauern ($\Delta t0\_I$, $\Delta t0\_II$) der Warnphase (I) und/oder der Teilbrems-Phase (II) und
    - ein dynamisches Kriterium (K2), das Positionen und/oder Geschwindigkeiten des Eigenfahrzeugs (1) und des Objektes (2) in den Phasen (I, II, III) beschreibt (St3),

    wobei in dem dynamischen Kriterium (K2) Bewegungsgleichungen (GL1, GL2) des Eigenfahrzeugs (1) und des Objektes (2) in zumindest zweiter Ordnung der Zeit (t) herangezogen werden, und
    in dem dynamischen Kriterium (K2) eine Notbrems-Beschleunigung ($a\_aeb$) in der Notbrems-Phase (III) und zumindest in einigen Verkehrssituationen (K4, St2a) eine Teilbrems-Beschleunigung ($a\_hc$) in der Teilbrems-Phase (II.) herangezogen wird zur Berücksichtigung einer Bremswirkung in der Teilbrems-Phase (II)
    **dadurch gekennzeichnet dass** in dem dynamischen Kriterium (K2) die Teilbrems-Beschleunigung ($a\_hc$) in der Teilbrems-Phase (II.) nur in Abhängigkeit von einem Entscheidungskriterium (K4) herangezogen wird, das in einem Entscheidungs-Schritt (St2a) entschieden wird,
    wobei in dem Entscheidungs-Schritt (St2a) eine Zuverlässigkeit (Z) der Ausbildung des Teilbrems-Bremsdrucks (p_hc) in der Teilbrems-Phase (II) bewertet wird, und die Zuverlässigkeit (Z) mit einem Zuverlässigkeits-Schwellwert (Z_tres) verglichen wird und

bei Überschreiten des Zuverlässigkeits-Schwellwerts (Z_tres) die Teilbrems-Beschleunigung (a_hc) bei der Ermittlung des dynamischen Kriteriums (K2) herangezogen wird und bei Unterschreiten des Zuverlässigkeits-Schwellwerts (Z_tres) nicht herangezogen wird.

2. Verfahren nach Anspruch 1, **dadurch gekennzeichnet, dass** als Anfangspunkte Anfangs-Zeitpunkte (t1, t2, t3) der Phasen ermittelt werden und als Mindestdauern Mindest-Zeitdauern ($\Delta t0\_I$, $\Delta t0\_II$) herangezogen werden.

3. Verfahren nach Anspruch 1 oder 2, **dadurch gekennzeichnet, dass** bei der Ermittlung, ob eine Notbremsung einzuleiten ist (St2) und bei der Ermittlung der Anfangspunkte (t1, t2, t3) Bewegungsgleichungen (Gl1, GL2) des Eigenfahrzeugs (1) und des Objektes (2) oder von Differenzwerten (dx, Dvy, Dva) des Eigenfahrzeugs (1) und des Objektes (2) in zweiter Ordnung der Zeit herangezogen werden.

4. Verfahren nach einem der Ansprüche 1 bis 3, **dadurch gekennzeichnet, dass** in dem dynamischen Kriterium (K2) immer die Teilbrems-Beschleunigung (a_hc) in der Teilbrems-Phase (II.) herangezogen wird.

5. Verfahren nach der Anspruch 1, **dadurch gekennzeichnet, dass** in dem Entscheidungs-Schritt (St2a) eine Zuverlässigkeit (Z) der der Ausbildung des Teilbrems-Bremsdrucks (p_hc) in der Teilbrems- Phase (II) und auch des Notbrems-Bremsdrucks (p_aeb) in der Notbrems-Phase (III) bewertet wird.

6. Verfahren nach einem der vorherigen Ansprüche, **dadurch gekennzeichnet, dass** folgende Zustandsgrößen oder Fahrdynamik-Größen des Eigenfahrzeugs (1) aufgenommen werden:
eine Eigengeschwindigkeit (v1), eine Eigenbeschleunigung (a1) des Eigenfahrzeugs (1), und direkt gemessen oder aus dem zeitlichen Verhalten des aus den Abstands-Messsignalen (S1) ermittelten Längsabstandes (dx), Längsgeschwindigkeitsdifferenz (Dvx) zu dem Objekt (2), eine zweite Geschwindigkeit (v2) des Objektes (2) und eine Längsbeschleunigungs-Differenz (Dax).

7. Verfahren nach einem der vorherigen Ansprüche, **dadurch gekennzeichnet, dass** in dem dynamischen Kriterium (K2) als längsdynamisches Teilkriterium (K2-L der Längsabstand (dx) und die Längsbeschleunigung (ax) in Abhängigkeit der Zeit (t) und als querdynamisches Teilkriterium (KL-q) ein Ausweichkriterium unter Heranziehung eines Querverhaltens (aq, w), insbesondere einer eigenen Querbeschleunigung (aq) des Eigenfahrzeugs (1) herangezogen werden.

8. Verfahren nach einem der vorherigen Ansprüche, **dadurch gekennzeichnet, dass** beim Zeitdauer-Kriterium (K1) eine eindeutig festgelegte Mindestdauer ($\Delta t0\_I$) der Warnphase (I) und eine Mindestdauer ($\Delta t0\_II$) der Teilbrems-Phase (II) angesetzt werden, die nicht unterschreitbare Mindestwerte, aber nach oben überschreitbar sind.

9. Verfahren zur Durchführung einer autonomen Notbremsung eines Eigenfahrzeugs (1), mit mindestens folgenden Schritten:

Durchführung eines Verfahrens zur Ermittlung einer autonomen Not-bremsung eines Eigenfahrzeugs (1) nach einem der vorherigen Ansprüche,
nachfolgend Einleitung der Warnphase (I) unter Ausgabe eines Warnsignals (S4) an den Fahrer (St4) in Abhängigkeit einer aktuellen Bewertung der Verkehrsituation (K, K-tres-I),
Einleitung der Teilbrems-Phase (II) unter Ausbildung einer Teilbeschleunigung (a_bc), eines niedrigeren Bremsdrucks (p_hc) oder niedrigeren Bremswirkung, zur Ausbildung einer haptischen Bremsdruck-Meldung an den Fahrer, (St5), in Abhängigkeit einer aktuellen Bewertung der Verkehrsituation (K, K-tres-II) und
Einleitung der Notbrems-Phase (III) unter Ausbildung einer Notbrems-Beschleunigung (a_aeb) mit einer höheren Bremswirkung oder höherem Bremsdruck ( p_aeb) in Abhängigkeit einer aktuellen Bewertung der Verkehrsituation (K, K-tres-III),
wobei bei der aktuellen Bewertung der Verkehrsituation vor Einleitung der Phasen (I, II, III) jeweils eine aktuelle Kritikalität (K) der Verkehrssituation ermittelt und bewertet wird.

10. Verfahren nach Anspruch 9, **dadurch gekennzeichnet, dass** die aktuelle Bewertung der Verkehrssituation vor der Einleitung der nächsten Phase (I, II, III) erfolgt, indem die aktuell ermittelte Kritikalität (K) mit jeweils einem K-Schwellwert (K-tres-I, K-tres-II, K-tres-III) verglichen wird.

**11.** Verfahren nach Anspruch 9 oder 10, **dadurch gekennzeichnet, dass** auch in dem Fall, dass bei Berücksichtigung der mindestens einen Mindestdauer ($\Delta t0\_II$, $\Delta t0\_II$) eine Kollision erfolgen wird, dennoch die Mindetsdauer, vorzugsweise Mindest-Zeitdauer ($\Delta t0\_I$, $\Delta t0\_II$), eingehalten wird.

**12.** Steuereinrichtung (6) für ein Fahrdynamiksystem (5) eines Eigenfahrzeugs (1), wobei die Steuereinrichtung (6) ausgebildet ist, folgende Signale aufzunehmen:

ein Fahrgeschwindigkeits-Signal der Eigenfahrgeschwindigkeit (v1) des Eigenfahrzeugs (1),
ein Abstands-Messsignal (S1) mit einem Längsabstand (dx) zu einem Objekt (2) vor dem Eigenfahrzeug (1),
wobei die Steuereinrichtung (6) ausgebildet ist zur direkten oder indirek- ten Ausgabe von Bremssignalen (S2) an Radbremsen (8) zur Einleitung eines Bremsvorgangs des Eigenfahrzeugs (1) und zur Ausgabe eines Warnsignals (S3) an eine Warnanzeige (9) zur Warnung des Fahrers, wobei die Steuereinrichtung (6) ausgelegt ist zur Ausführung eines Verfahrens nach einem der Ansprüche 1 bis 11.

**13.** Fahrzeug (1), insbesondere Nutzfahrzeug, mit Radbremsen (8) zur Durchführung eines Bremsvorgangs,

einem Fahrdynamiksystem (5) mit einer Steuereinrichtung (6) nach Anspruch 12,
einem Abstandssensor (4) zur Ermittlung eines Längsabstandes (dx) zu einem vorderen Objekt (2) und Ausgabe von Abstands-Messsignalen (S1) an die Steuereinrichtung (6),
wobei die Steuereinrichtung (6) ausgebildet ist zur direkten oder indirekten Ausgabe von Bremssignalen (S2) an die Radbremsen (8) zur Einleitung einer autonomen Teilbrems-Phase (II) und einer autonomen Notbrems-Phase (III) des Eigenfahrzeugs (1) und zur Ausgabe eines Warnsignals (S3) an eine Warnanzeige (9) zur Warnung des Fahrers.

**Claims**

**1.** A method for determining an autonomous emergency braking of an ego vehicle (1), having at least the following steps:

capturing driving dynamics variables (v1, a1) of the ego vehicle (1),
capturing distance measurement signals (S1) and determining at least a longitudinal distance (dx) of the ego vehicle (1) from a front object (2) (St1),
assessing, on the basis of the driving dynamics variables (v1, a1) and the distance measurement signals (S1), whether an emergency braking is to be initiated (St2), in case the decision is made to initiate an emergency braking (y),
determining

- a first starting point (t1) for initiating a warning phase (I) emitting a warning signal (S3) without initiating a braking,
- a second starting point (t2) for initiating a subsequent partial braking phase (II.) with a lower partial braking braking pressure (p_hc) and
- a third starting point (t3) for initiating a subsequent emergency braking phase (III.) for initiating an emergency braking phase (III.) with a higher emergency braking braking pressure (p_aeb), (St3)

wherein in the determination of the starting points (t1, t2, t3) the following criteria are used

- a period criterion (K1) with minimum periods ($\Delta t0\_I$, $\Delta t0\_II$) of the warning phase (I) and/or of the partial braking phase (II) and
- a dynamic criterion (K2), which describes the positioning and/or speeds of the ego vehicle (1) and of the object (2) in the phases (I, II, III) (St3),

wherein in the dynamic criterion (K2) movement equations (GL1, GL2) of the ego vehicle (1) and of the object (2) in at least the second order of the time (t) are used, and
in the dynamic criterion (K2) an emergency braking acceleration (a_aeb) is used in the emergency braking phase (III) and at least in some traffic situations (K4, St2a) a partial braking acceleration (a_hc) is used in the partial braking phase (II.) for the consideration of a braking effect in the partial braking phase (II),
**characterized in that** in the dynamic criterion (K2) the partial braking acceleration (a_hc) is used in the partial braking phase (II.) only in dependence on a decision criterion (K4) that is decided in a decision step (St2a),

wherein in the decision step (St2a) a reliability (Z) of the formation of the partial braking braking pressure (p_hc) is assessed in the partial braking phase (II), and the reliability (Z) is compared with a reliability threshold value (Z_tres) and if the reliability threshold value (Z_tres) is exceeded, the partial braking acceleration (a_hc) is used in the determination of the dynamic criterion (K2) and if the reliability threshold value (Z_tres) is fallen short of, it is not used.

2. The method according to claim 1, **characterized in that** starting times (t1, t2, t3) of the phases are determined as starting points and minimum times ($\Delta t0\_I$, $\Delta t0\_II$) are used as minimum periods.

3. The method according to claim 1 or 2, **characterized in that** in the determination as to whether an emergency braking is to be initiated (St2) and in the determination of the starting points (t1, t2, t3) movement equations (GL1, GL2) of the ego vehicle (1) and of the object (2) or of difference values (dx, Dvy, Dva) of the ego vehicle (1) and of the object (2) in the second order of the time are used.

4. The method according to any of claims 1 to 3, **characterized in that** in the dynamic criterion (K2) the partial braking acceleration (a_hc) is always used in the partial braking phase (II.).

5. The method according to claim 1, **characterized in that** in the decision step (St2a) a reliability (Z) of the formation of the partial braking braking pressure (p_hc) is assessed in the partial braking phase (II) and also of the emergency braking pressure (p_aeb) in the emergency braking phase (III).

6. The method according to any of the foregoing claims, **characterized in that** the following state variables or driving dynamics variables of the ego vehicle (1) are captured:
an ego speed (v1), an ego acceleration (a1) of the ego vehicle (1), and directly measured or determined from the temporal behavior of the longitudinal distances (dx) determined from the distance measurement signals (S1), longitudinal speed difference (Dvx) to the object (2), a second speed (v2) of the object (2) and a longitudinal acceleration difference (Dax).

7. The method according to any of the foregoing claims, **characterized in that** in the dynamic criterion (K2) the longitudinal distance (dx) is used as the longitudinal dynamic partial criterion (K2-L) and the longitudinal acceleration (ax) as a function of the time (t) and as lateral dynamic partial criterion (KL-q) an avoidance criterion using a lateral behavior (aq, $\omega$) is used, in particular of an own lateral acceleration (aq) of the ego vehicle (1).

8. The method according to any of the foregoing claims, **characterized in that** in the period criterion (K1) an unambiguously defined minimum period ($\Delta t0\_I$) of the warning phase (I) and a minimum period ($\Delta t0\_II$) of the partial braking phase (II) are applied, which are not minimum values which can be undershot, but can be upwardly exceeded.

9. A method for carrying out an anonymous emergency braking of an ego vehicle (1), having at least the following steps:

carrying out a method for determining an autonomous emergency braking of an ego vehicle (1) according to any of the foregoing claims,
subsequent initiation of the warning phase (I) while emitting a warning signal (S4) to the driver (St4) depending on a current assessment of the traffic situation (K, K-tres-I),
initiation of the partial braking phase (II) while forming a partial acceleration (a_bc) of a lower braking pressure (p_hc) or lower braking effect, for forming a haptic braking pressure message to the driver (St5) depending on a current assessment of the traffic situation (K, K-tres-II) and
initiating the emergency braking phase (III) while forming an emergency braking acceleration (a_aeb) with a higher braking effect or higher braking pressure (p_aeb) depending on a current assessment of the traffic situation (K, K-tres-III),
wherein in the current assessment of the traffic situation, prior to initiating the phases (I, II, III), in each case a current criticality (K) of the traffic situation is determined and assessed.

10. The method according to claim 9, **characterized in that** the current assessment of the traffic situation occurs prior to the initiation of the next phase (I, II, III), by comparing the currently determined criticality (K) with a respective K threshold value (K-tres-I, K-tres-II, K-tres-III).

11. The method according to claim 9 or 10, **characterized in that** also in the event that, upon consideration of the at least one minimum period ($\Delta t0\_II$, $\Delta t0\_II$) a collision will occur, nevertheless the minimum period, preferably minimum

time ($\Delta$t0_I, $\Delta$t0_II) is observed.

**12.** A control device (6) for a driving dynamics system (5) of an ego vehicle (1), wherein the control device (6) is configured to capture the following signals:

> a driving speed signal of the ego speed (v1) of the ego vehicle (1),
> a distance measurement signal (S1) with a longitudinal distance (dx) to an object (2) in front of the ego vehicle (1), wherein the control device (6) is configured to directly or indirectly output braking signals (S2) to the wheel brakes (8) to initiate a braking operation of the ego vehicle (1) and to output a warning signal (S3) to a warning display (9) to warn the driver, wherein the control device (6) is designed to execute a method according to any of claims 1 to 11.

**13.** A vehicle (1), in particular a utility vehicle, having wheel brakes (8) for carrying out a braking operation,

> a driving dynamics system (5) with a control device (6) according to claim 12,
> a distance sensor (4) for determining a longitudinal distance (dx) to a front object (2) and for outputting distance measurement signals (S1) to the control device (6),
> wherein the control device (6) is configured to directly or indirectly output braking signals (S2) to the wheel brakes (8) to initiate an autonomous partial braking phase (II) and an autonomous emergency braking phase (III) of the ego vehicle (1) and to output a warning signal (S3) to a warning display (9) to warn the driver.

**Revendications**

**1.** Procédé pour établir un freinage d'urgence autonome d'un véhicule personnel (1), avec au moins les étapes suivantes :

> enregistrement de grandeurs de dynamique de roulage (v1, a1) du véhicule personnel (1),
> enregistrement de signaux de mesure de distance (S1) et établissement d'au moins une distance longitudinale (dx) de son propre véhicule (1) par rapport à un objet (2) qui se trouve devant (St1),
> évaluer si, sur la base des grandeurs de dynamique de roulage (v1, a1) et des signaux de mesure de distance (S1), un freinage d'urgence doit être déclenché (St2), dans le cas où il a été décidé de déclencher un freinage d'urgence (y),
> établir

>> - un premier point de départ (t1) pour déclencher une phase d'avertissement (I) sous condition de l'émission d'un signal d'avertissement (S3) sans déclenchement d'un freinage,
>> - un deuxième point de départ (t2) pour déclencher une phase de freinage partiel (II.) suivante avec une pression de freinage de freinage partiel (p_hc) plus basse et
>> - un troisième point de départ (t3) pour déclencher une phase de freinage d'urgence (III.) suivante pour déclencher une phase de freinage d'urgence (III.) avec une pression de freinage de freinage d'urgence (p_aeb) plus élevée, (St3) dans lequel lors de l'établissement des points de départ (t1, t2, t3) sont utilisés
>> - un critère de durée temporelle (K1) avec des durées minimales ($\Delta$t0_I, $\Delta$t0_II) de la phase d'avertissement (I) et/ou de la phase de freinage partiel (II) et
>> - un critère dynamique (K2), qui décrit des positions et/ou des vitesses du véhicule personnel (1) et de l'objet (2) dans les phases (I, II, III) (St3),

> dans lequel
> dans le critère dynamique (K2) des équations de mouvement (GL1, GL2) du véhicule personnel (1) et de l'objet (2) sont utilisées dans au moins un second ordre du temps (t), et
> dans le critère dynamique (K2) est utilisée une accélération de freinage d'urgence (a_aeb) dans la phase de freinage d'urgence (III), et au moins dans certaines situations de circulation (K4, St2a) est utilisée une accélération de freinage partiel (a_hc) dans la phase de freinage partiel (II.), pour la prise en compte d'un effet de freinage dans la phase de freinage partiel (II)
> **caractérisé en ce que** dans le critère dynamique (K2) l'accélération de freinage partiel (a_hc) dans la phase de freinage partiel (II.) est utilisée uniquement en fonction d'un critère de décision (K4) qui a été décidé dans une étape de décision (St2a),
> dans lequel dans l'étape de décision (St2a) une fiabilité (Z) de la formation de la pression de freinage de freinage partiel (p_hc) est évaluée dans la phase de freinage partiel (II), et la fiabilité (Z) est comparée à une valeur seuil de fiabilité (Z_tres) et dans le cas d'un dépassement par le haut de la valeur seuil de fiabilité (Z_tres) l'accélération de freinage partiel (a_hc) est utilisée lors de l'établissement du critère dynamique (K2) et dans le cas d'un dépassement par le bas de la valeur seuil de fiabilité (Z_tres) l'accélération de freinage partiel n'est pas utilisé.

2. Procédé selon la revendication 1, **caractérisé en ce qu'**en tant que points de départ sont établis des points temporels de départ (t1, t2, t3) des phases et en tant que durées minimales sont utilisées des durées temporelles minimales ($\Delta$t0_I, $\Delta$t0_II).

3. Procédé selon la revendication 1 ou 2, **caractérisé en ce que** lors de l'établissement quant à savoir si un freinage d'urgence doit être déclenché (St2) et lors de l'établissement des points de départ (t1, t2, t3), des équations de mouvement (GL1, GL2) du véhicule personnel (1) et de l'objet (2) ou de valeurs de différence (dx, Dvy, Dva) du véhicule personnel (1) et de l'objet (2) sont utilisés en second ordre du temps.

4. Procédé selon l'une des revendications 1 à 3, **caractérisé en ce que** dans le critère dynamique (K2) c'est toujours l'accélération de freinage partiel (a_hc) qui est utilisée dans la phase de freinage partiel (II.).

5. Procédé selon la revendication 1, **caractérisé en ce que** dans l'étape de décision (St2a) une fiabilité (Z) de la formation de la pression de freinage de freinage partiel (p_hc) est évaluée dans la phase de freinage partiel (II) et une fiabilité de la pression de freinage de freinage d'urgence (p_aeb) est également évaluée dans la phase de freinage d'urgence (III).

6. Procédé selon l'une des revendications précédentes, **caractérisé en ce que** les grandeurs d'état ou grandeurs de dynamique de roulage du véhicule personnel (1) suivantes sont enregistrées :
une vitesse propre (v1), une accélération propre (a1) du véhicule personnel (1), et mesurée directement ou à partir du comportement dans le temps de la distance longitudinale (dx) établie à partir des signaux de mesure de distance (S1), qui est une différence de vitesse longitudinale (Dvx) par rapport à l'objet (2), une seconde vitesse (v2) de l'objet (2) et une différence d'accélération longitudinale (Dax).

7. Procédé selon l'une des revendications précédentes, **caractérisé en ce que** dans le critère dynamique (K2) en tant que critère partiel longitudinalement dynamique (L2-L) est utilisée la distance longitudinale (dx) et l'accélération longitudinale (ax) en fonction du temps (t), et en tant que critère partiel transversalement dynamique (KL-q) est utilisé un critère d'évitement en mettant à contribution un comportement transversal (aq, $\omega$), en particulier une accélération transversale propre (aq) du véhicule personnel (1).

8. Procédé selon l'une des revendications précédentes, **caractérisé en ce que** dans le cadre du critère de durée temporelle (K1) sont appliquées une durée minimale ($\Delta$t0_I) clairement définie de la phase d'avertissement (I) et une durée minimale ($\Delta$t0_II) de la phase de freinage partiel (II), qui ne sont pas des valeurs minimales qui peuvent être dépassées par le bas mais dépassées par le haut.

9. Procédé pour réaliser un freinage d'urgence autonome d'un véhicule personnel (1), avec au moins les étapes suivantes :

réalisation d'un procédé pour établir un freinage d'urgence autonome d'un véhicule personnel (1) selon l'une des revendications précédentes,
puis déclenchement de le phase d'avertissement (I) sous condition de l'émission d'un signal d'avertissement (S4) à destination du conducteur (St4) en fonction d'une évaluation en cours de la situation de circulation (K, K-tres-I),
déclenchement de la phase de freinage partiel (II) sous condition de la formation d'une accélération partielle (a_bc), d'une pression de freinage (p_hc) plus basse ou d'un effet de freinage plus bas, pour la formation d'une information haptique de pression de freinage à destination du conducteur, (St5), en fonction d'une évaluation en cours de la situation de circulation (K, K-tres-II) et
déclenchement de la phase de freinage d'urgence (III) sous condition de la formation d'une accélération de freinage d'urgence (a_aeb) avec un effet de freinage plus élevé ou une pression de freinage (p_aeb) plus élevée en fonction d'une évaluation en cours de la situation de circulation (K, K-tres-III),
dans lequel lors de l'évaluation en cours de la situation de circulation avant déclenchement des phases (I, II, III) une criticité (K) en cours de la situation de circulation est respectivement établie ou évaluée.

**10.** Procédé selon la revendication 9, **caractérisé en ce que** l'évaluation en cours de la situation de circulation se produit avant le déclenchement de la phase (I, II, III) suivante, **en ce que** la criticité (K) en cours établie est respectivement comparée à une valeur seuil K (K-tres-I, K-tres-II, K-tres-III).

**11.** Procédé selon la revendication 9 ou 10, **caractérisé en ce que** même dans le cas où une collision se produit alors que la au moins une durée minimale ($\Delta t0\_II$, $\Delta t0\_II$) a été prise en compte, la durée minimale, de préférence la durée temporelle minimale ($\Delta t0\_I$, $\Delta t0\_II$), demeure respectée.

**12.** Dispositif de commande (6) pour un système de dynamique de roulage (5) d'un véhicule personnel (1), dans lequel le dispositif de commande (6) est conçu pour enregistrer les signaux suivants :

un signal de vitesse de roulage de la vitesse de roulage propre (v1) du véhicule personnel (1),
un signal de mesure de distance (S1) avec une distance longitudinale (dx) par rapport à un objet (2) devant le véhicule personnel (1),
dans lequel le dispositif de commande (6) est conçu pour émettre directement ou indirectement des signaux de freinage (S2) vers des freins de roue (8) afin de déclencher un processus de freinage du véhicule personnel (1), et pour émettre un signal d'avertissement (S3) vers un indicateur d'avertissement (9) afin d'avertir le conducteur, dans lequel le dispositif de commande (6) est disposé pour réaliser un procédé selon l'une des revendications 1 à 11.

**13.** Véhicule (1), en particulier véhicule utilitaire, avec des freins de roue (8) pour réaliser un processus de freinage,

un système de dynamique de roulage (5) avec un dispositif de commande (6) selon la revendication 12,
un capteur de distance (4) pour établir une distance longitudinale (dx) par rapport à un objet (2) qui se trouve devant, et émettre des signaux de mesure de distance (S1) vers le dispositif de commande (6),
dans lequel le dispositif de commande (6) est conçu pour émettre directement ou indirectement des signaux de freinage (S2) vers les freins de roue (8) afin de déclencher une phase de freinage partiel (II) autonome et une phase de freinage d'urgence (III) autonome du véhicule personnel (1), et pour émettre un signal d'avertissement (S3) vers un indicateur d'avertissement (9) afin d'avertir le conducteur.

Fig. 1

**Fig. 2**

**Fig. 3**

16

**Fig. 4a**

**Fig. 4b**

**IN DER BESCHREIBUNG AUFGEFÜHRTE DOKUMENTE**

**In der Beschreibung aufgeführte Patentdokumente**

- EP 2814704 B1
- DE 102014008431 A1
- DE 102010008208 A1
- DE 102005054754 A1
- DE 10237714 A1